# EUROPEAN PATENT APPLICATION

(11) **EP 2 098 324 A1**
(43) Date of publication of application: **09.09.2009**
(21) Application number: 09154559.0
(22) Date of filing: 06.03.2009
(51) Int. Cl.: B23K 9/02, B23K 9/025, B23K 9/028, B23K 33/00

(54) **Welded butt joints on tubes having dissimilar end preparations**

(30) Priority: 06.03.2008 US 43686
(71) Applicant: Welding Services, INC., Norcross, GA 30071 (US)
(72) Inventor: Sessions, Ben Dorrell, Lawrenceville Georgia 30043 (US)
(74) Representative: Brown, David Leslie

(57) **Abstract**

A combination of work pieces is provided that includes a first work piece (38) having a stepped end preparation with a first step (56) and a second step (58), and a second work piece (40) having a beveled end preparation. The first step is located at an end of the work piece and the second step is set away longitudinally from the end. A weld joint is provided having a joint groove with a lower face formed by a stepped end preparation, such as that of the first work piece, and an upper face formed by a beveled end preparation, such as that of the second work piece. A method for welding a first work piece to a second work piece is also provided. Preferably, in the weld joint and welding method, the first and second work pieces are in a vertically-extended (2G) arrangement.

## Description

### Field of the Invention

This invention relates to the field of welding, in particular, the field of welding butt joints in vertically arranged tubing.

### Background of the Invention

Joining tubes for industrial applications generally involves the butt-welding of tubes in bundled arrays. In such arrangements, spacing between the tubes may be less than an inch, thereby making it very difficult, if not impossible, to joint weld individual tubes using manual or conventional machine welding techniques. Such tube configurations are typically used for critical processes, such as conveyance of high pressure steam, and so demand high-quality welded joints for safety and reliability. When these critical systems require maintenance and repair, time is of the essence, and the use of low production methods to achieve the necessary quality are not desirable and may cause substantial adverse economic impact.

Conventional tube joint butt welding is performed with standard and symmetrical weld joint designs, and is mostly performed manually, although some machine welding systems are available. These designs and techniques require the addition of weld filler materials in the form of welding rods and wires. Multiple passes are typically required to complete the joint by filling it with weld material.

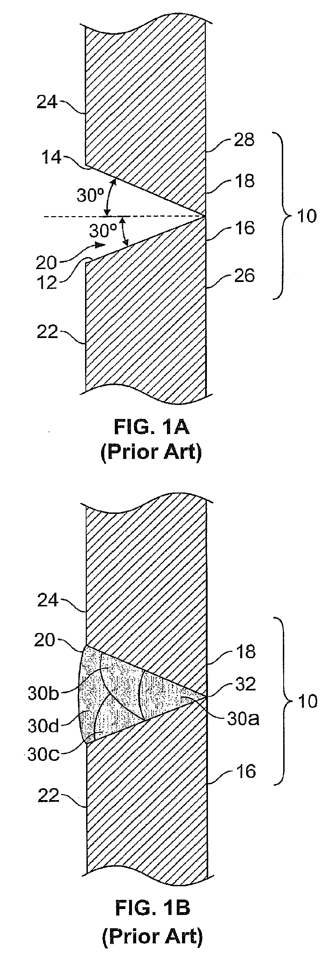

As illustrated in FIG. 1A, a conventional method for preparing a weld joint 10 involves beveling the mating tube ends 12, 14 of tube sections 16, 18 to form a joint groove 20. The beveling provides a wider joint groove 20 at the outside surfaces 22, 24 of the tube sections 16, 18 compared to the mating inside surfaces 26, 28. The inner surfaces 26, 28 are typically counter-bored to assure that their respective diameters match. This symmetrical design is classically known as an open butt weld preparation. Turning to FIG. 1B, the first weld bead 30a, using a consumable weld rod or wire of the desired metallurgical chemistry, is placed at the joint root 32 of the groove opening 32 and formed circumferentially around the two-tube weld joint 10. Subsequent weld beads 30b, 30c, 30d are placed in the same circumferential movement until the weld joint 10 is completely filled, being at least flush with the exterior surfaces 22, 24 of the tube sections 16, 18. With each weld pass to deposit another bead of weld filler material in the weld joint 10, heat is applied to the base material, creating a "heat-affected" zone of altered base material metallurgy and physical characteristics, which generally has a negative effect on system performance.

Manual methods of applying weld beads typically require a number of starts and stops in applying each weld bead as the weld applicator repositions each time to continue a circumferential bead. Each start and stop creates another point of high heat, which adds significantly to the heat-affected zone in the base materials, thereby increasing the residual stresses that remain in the weld joint. Some advanced alloy materials are quite susceptible to failure if they are exposed to sufficient localized heating. Minimizing the heat input for weld-joining these materials preserves the performance expected of the advanced alloys.

In contrast to the variability of manual joints, the consistency of machine-applied weld joints provides substantial value for critical processes where reliability is necessary. The frequency of starts and stops can be substantially reduced because the welding equipment revolves around the tube and, therefore, does not require the repositioning that a manual applicator must perform. However, the operating constraints of machine welding impose a minimum size on machine weld heads. Conventional machine weld tooling must enable the feeding of weld wire as a consumable filler for the joint. The feeding of weld wire adds complexity and size to the weld head and creates a physical limitation on the size to which the equipment may be reduced. Thus, the minimum practical equipment size is larger than that which may be required for the confined space and limited access encountered in tube bundle configurations. In addition, the choice of weld filler materials and associated weld parameters may require either waiting between weld bead passes on a given joint or moving through a sequence of other tube joints so that the heat in a joint can dissipate and the interpass temperature will not be exceeded. Such requirements may result in the need for multiple set ups on the same joint.

Current welding practices require multiple passes using minimal amounts of material because of lack of control of the puddle during weld out of the joint. Particularly in the vertically-extended (2G) position, gravity effects and heat flow affect the weld puddle geometry before it sets. Too large of a puddle will result in puddle sag with undercutting of the upper boundary interfaces and excess material and bulging at the lower interface.

### Summary of the Invention

In a first embodiment, the invention provides a combination of work pieces including a first work piece having a stepped end preparation with a first step and a second step, and a second work piece having a beveled end preparation. The first work piece has a first surface and a second surface which is located opposite the first surface. The first step is located at the end of the first work piece and adjacent to the first surface, and has an edge that is set back laterally from the first surface. The second step is set away longitudinally from the end of the first work piece and adjacent to the second surface. Preferably, the first step is adjacent to the second step. The second end piece has a third surface and a fourth surface which is located opposite the third surface. The angle of the bevel opens outward toward the fourth surface. Further, the ends of the respective work pieces are adapted to cooperate in forming a weld joint.

In a second embodiment, the invention provides a weld joint having a joint groove with a lower face formed by a stepped end preparation and an upper face formed by a beveled end preparation. The weld joint comprises a first work piece and a second work piece. The first work piece has a first surface and a second surface which is located opposite the first surface. The first step is located at the end of the first work piece and adjacent to the first surface. The second step is set away longitudinally from the end of the first work piece and adjacent to the second surface. The second end piece has a third surface and a fourth surface which is located opposite the third surface. The angle of the bevel opens outward toward the fourth surface. The end of the first work piece is juxtaposed the end of the second work piece and oriented such that the first step is above the second step. The end of the second work piece is positioned above the first step so as to form a joint groove within which at least a portion of the first step is exposed when the second surface is aligned with the fourth surface. Preferably, the first and second work pieces are in a vertically-extended (2G) arrangement, and substantially all of the first step is exposed within the joint groove.

In a third embodiment, the invention provides a method of welding a first work piece to a second work piece. The steps of the method include: (1) providing a first work piece having a first surface, a second surface which is located opposite the first surface, a first step which is located at an end of the first work piece and is adjacent to the first surface, and a second step that is set away longitudinally from the end of the first work piece and is located adjacent to the second surface; (2) providing a second work piece having a third surface, a fourth surface which is located opposite the third surface, and an end which is beveled at an angle relative to a plane that is perpendicular to the fourth surface, such that the angle opens toward the fourth surface; (3) forming a weld joint by positioning the first and second work pieces such that the first step is above the second step and the end of the second work piece is above the first step such as to form a joint groove within which at least a portion of the first step is exposed, and such that the second surface is aligned with the fourth surface; and (4) performing at least one welding process to weld the first work piece to the second work piece at the weld joint. In the welding process, it is preferred that the welding wire be fed to the welding puddle at the surface of the beveled end near the fourth surface and that the welding tip be moved along an inner edge of the first step of the first work piece.

### Brief Description of the Drawings

For a more complete understanding of the present invention, reference is made to the following detailed description of various exemplary embodiments considered in conjunction with the accompanying drawings, in which:
FIG. 1A is a schematic, cross-sectional view of a weld joint formed by upper and lower tubes in a 2G position having conventional end preparations for joint welding;
FIG. 1B is a schematic, cross-sectional view of the weld joint of FIG. 1A filled by multiple beads of weld metal;
FIG. 2 is a schematic, cross-sectional view of the weld joint formed by upper and lower tubes in a 2G position having end preparations according to the present invention;
FIG. 3 is the schematic, cross-sectional view of the weld joint of FIG. 2 showing reference dimensions;
FIG. 4 is a schematic representation of a front view and partial cross-section of the weld joint of FIG. 2, showing a preferred feed entry point for filler wire and touch-off point for an electrode, with the relative positions of the weld wire, electrode and weld pool during the formation of a joint weld;
FIG. 5 is a schematic view looking along the length of the upper and lower tubes of FIG. 2 showing the angles of entry of the weld wire and tungsten electrode during formation of a joint weld; and

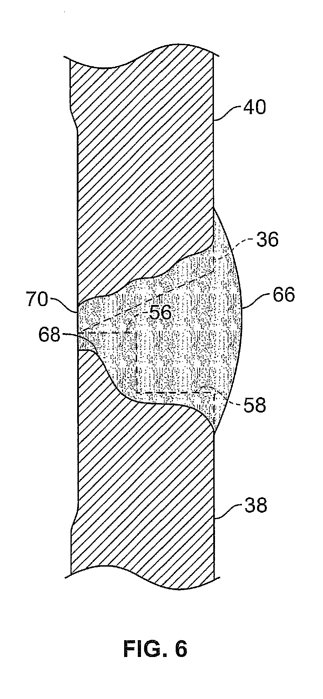

FIG. 6 is a schematic, cross-sectional view of the upper and lower tubes of FIG. 2 joined by a weld.

### Detailed Description of the Invention

In the specification, the following terms are used to refer to features of the structures relevant to the invention. A "weld joint" is a structure formed by the prepared ends of two work pieces that are to be welded together. A "joint root" is a portion of a weld joint where the work pieces are closest to each other. A "joint groove" is an open space within the weld joint extending outwardly from the joint root. A "groove face" is a surface at an end of a work piece that is exposed within the joint groove.

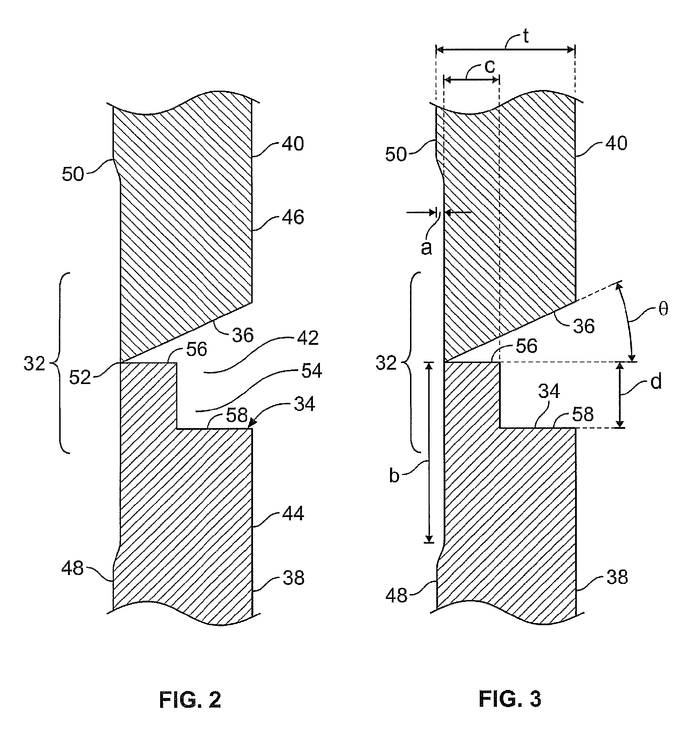

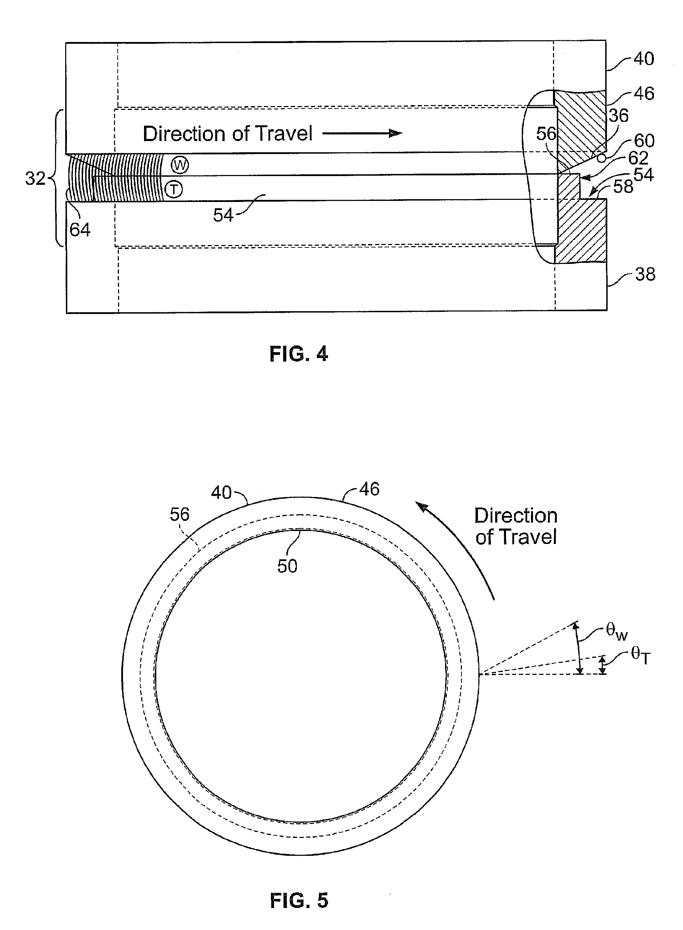

FIG. 2 shows a weld joint 32 formed according to an embodiment of the present invention. Groove faces 34, 36 are formed on first work piece 38 and second work piece 40, respectively, so as to form groove opening 42 when work pieces 38, 40 are arranged such that groove faces 34, 36 approach each other. The groove opening 42 opens such that it is wider at outer surfaces 44, 46 of the respective work pieces 38, 40 than at inner surfaces 48, 50, where the joint root 52 is formed. It is to be understood that the terms "outer" and "inner", as used herein, are relative terms used to denote opposite sides of a portion of a work piece (e.g., a plate or the wall of a tube). The groove face 34 of the first work piece 38 is formed such that it has a notch 54 formed therein and extending along the periphery of the work piece 38 (see FIG. 4). Returning to FIG. 2, the notch 54 is inset from the first surface 44, forming a first step 56 that is adjacent to the inner surface 48, and a second step 58 that is adjacent to the outer surface 44. The first step 56 thus is higher than the second step 58 when the work piece 38 is oriented such that the groove face 34 is uppermost. Preferably, the second step 58 is flat, and is parallel to a horizontal plane (not shown), when the work piece 38 is in the aforementioned orientation. The groove face 36 of the second work piece 40 is beveled.

An example of the use of the weld joint 32 in welding the ends of a pair of tubes is presented herebelow. In one embodiment of the invention, the first and second work pieces 38, 40 are tube sections 38, 40. It will be obvious to one skilled in the welding art that the weld joint 32 can be adapted for use in joining work pieces other than tube sections, such as plates or work pieces of other geometries that are to be joined end to end in a vertically extended (2G) arrangement.

Referring to FIG. 3, in a working embodiment of the invention, the groove faces 34, 36 were prepared in matched 2.5-inch diameter tube sections 38, 40 of carbon steel having a wall thickness (t) of 0.188 inch, counterbored to a depth (a) of 0.010 inch along a length (b) of 0.250 inch of the interior surface 48, 50 of each respective tube section 38, 40. The groove face 34 of tube section 38 was machined to produce a first step 56 having a thickness (c) of 0.075 inch, with a distance (d) of 0.090 inch between the first step 56 and the second step 58. The groove face 36 of tube section 40 was beveled at an angle (Θ) of 25 degrees. The recited dimensions of the groove faces 34, 36 may be varied somewhat, especially for work pieces having wall thicknesses (t) other than that of this example, but it is preferred that the thickness (c) of the first step 56 be about 0.075 inch and the bevel of the upper groove face 36 be about 25 degrees, within a tolerance of about plus-or-minus 2 degrees.

The weld joint 32 was welded in a single pass by a machine welding system (Liburdi Dimetrics, Davidson, North Carolina) using a tungsten inert gas (TIG) welding process, with the tube sections 38, 40 vertically extended in a 2G arrangement. A carbon steel (70S-7) filler wire, having a diameter of 0.035 inch, was selected as the welding wire. FIG. 4 shows the feed point for the welding wire 60, which is on the upper groove face 36 near the outer surface 46 of the tube section 40. The tungsten touch-off point 62, near the top of the first step 56, can also be seen in FIG. 4. The geometry of the tungsten tip was provided with a nominal 0.020-inch land as an aid in maintaining voltage feedback and control.

Welding was performed with pulsed electrical current having a primary (peak) pulse of 170 Amps and a background current of 40 Amps. The low pulse current occurred every 0.6 seconds at a normal sinusoidal transition from peak (50% pulse width). The travel speed of the tungsten tip (T) was 2.7 inches per minute along the circumference of the weld joint 32, following a delay of 8 seconds after energizing the tungsten tip. Following a similar, but shorter delay, the filler wire 60 was fed to the weld puddle 64 in a pulse fashion to coordinate with the current pulse. The filler wire was fed to the weld puddle 64 at a rate of 65 inches per minute at the peak current pulse and at a rate of 35 inches per minute during the background current pulse. Referring to FIG. 5, the lead angle of the wire feed (Θ_{W}) and the lead angle of the tungsten tip (Θ_{T}) were 30 degrees and 5 to 10 degrees, respectively.

Prior to the welding, an inert gas back purge (i.e., a purge of the interior of the tube sections 38, 40, or the backside of the joint root 52 (see FIG. 2)) was established using 100% argon gas at a back pressure of less than 7 psi. During the welding, an arc shielding gas, comprising 50% argon and 50% helium, was used at a flow rate of 30 cubic inches per minute using a number 10 gas cup to maintain the arc environment.

The weld was completed in a single pass over a period of about 3 minutes for the typical 2.5-inch diameter tube sections with 0.0188-inch wall thicknesses, where conventional methods would have required 20-30 minutes to complete, plus time required for set up and delay time between passes. The consumption of filler wire was about 60% less than with conventional methods.

It should be understood that, for any weld joint, multiple tests may be performed to optimize particular welding parameters for performing a satisfactory weld. With reference to FIGS. 2 and 4, a fine balance should be maintained between heating the filler wire 60 and chilling the weld puddle 64 (through addition of the filler wire 60) to allow wetting of the upper groove face 36 and rapid fixing of the filler metal to the weld joint 32. During the welding process, the arc from the tungsten tip consumes the first and second steps 56, 58 of the exposed lower groove face 34. The heat generated thereby rises to maintain enough heat in the molten puddle 64 to melt the filler wire 60. The weld puddle 64 should not become so molten that gravity pulls the weld puddle 64 away from the upper groove face 36, causing the weld defect known as undercutting. When an effective combination of weld parameters is applied, the wetting of the upper groove face 36 provides enough surface tension to guide a properly formed weld puddle 64 to follow the contour of the weld joint 32 and keep the weld puddle 64 from falling out of the weld joint 32. In the weld joint 32, the consumption of the steps 56 and 58, along with consumption of the filler wire 60, allows gravity to assist in filling in the groove opening 42. The design of the steps 56, 58 and the remaining lower internal joint surface area provides a balance of filler material and heat transfer area to assure full fusion and sufficient chilling of the weld puddle 64 such that the weld puddle 64 remains in place without falling out of place or slumping excessively. A schematic, cross-sectional illustration of a completed, single-pass weld of the weld joint 32 is presented in FIG. 5, showing the weld bead 66, exemplary lower and upper boundaries 68, 70 of the fused weld and tube sections 38, 40.

It should be noted that alternative welding processes may use consumable inserts of welding metal, rather than welding wire. Such inserts are specially engineered to mate with prescribed weld joint preparations. Specially-designed machine welding equipment consume the insert in lieu of adding wire to fill the joint groove. Depending on the dimensions of the weld joint, it is possible to consume the insert to create a completed weld in a single pass.

It should be understood that the embodiments described herein are merely exemplary and that a person skilled in the art may make many variations and modifications thereto without departing from the spirit and scope of the present invention. It will be recognized that the weld joint disclosed herein can be applied to a tube, pipe, plate or work piece of other geometry. It will further be recognized that, for tubes or pipes, the weld joint can be reversed for application of weld filler material from the inside of the work piece. Besides being applicable to work pieces in a 2G position, the weld joint 32 may also be applied in situations where the work pieces are off of a vertical orientation by as much as 15 degrees. Further, the dimensions of the lower and upper groove faces 34, 36 may be varied depending on the thickness of the base material and the filler metal selected. The selection of suitable filler metals for the materials to be welded, and for the uses to which the welded materials will be put, is routine in the welding arts. All such variations and modifications, including those discussed above, are intended to be included within the scope of the invention, which is described, in part, in the claims presented below.
The following numbered paragraphs define particular aspects of the present invention.
1. A combination of work pieces, comprising:
   a first work piece having a first surface, a second surface, which is located opposite said first surface, a first step, which is located at an end of said work piece and is adjacent to said first surface, and a second step, which is set away longitudinally from said end of said first work piece and is located adjacent to said second surface; and
   a second work piece having a third surface, a fourth surface, which is located opposite said third surface, and an end, which is beveled at an angle relative to a plane that is perpendicular to said fourth surface, said end of said first work piece and said end of said second work piece being sized and shaped so as to cooperate in forming a weld joint.
2. The combination of paragraph 1, wherein said end of said first work piece is dissimilar in shape to said end of said second work piece.
3. The combination of paragraph 1, wherein said first step is adjacent to said second step.
4. The combination of paragraph 1, wherein said end of said first work piece and said end of said second work piece are opposite ends of a single body.
5. The combination of paragraph 1, wherein said end of said first work piece is sized and shaped such as to be juxtaposed said end of said second work piece, with said second surface substantially aligned with said fourth surface.
6. The combination of paragraph 1, wherein said first work piece and said second work piece are plate-like.
7. The combination of paragraph 1, wherein said second step has a surface which is substantially parallel to a plane which is perpendicular to said second surface.
8. The combination of paragraph 1, wherein said angle is an angle of about 25 degrees.
9. The combination of paragraph 1, wherein said first work piece includes a first tube section, said second surface being an outer surface of said first tube section, and said second work piece includes a second tube section, said fourth surface being an outer surface of said second tube section.
10. The combination of paragraph 1, wherein said first work piece includes a first tube section, said second surface being an inner surface of said first tube section, and said second work piece includes a second tube section, said fourth surface being an inner surface of said second tube section.
11. The combination of paragraph 10, wherein said second step has a surface that is substantially parallel to a plane that is perpendicular to a centerline of said first tube section.
12. The combination of paragraph 10, said angle being an angle of about 25 degrees.
13. A weld joint, comprising:
   a first work piece having a first surface, a second surface, which is located opposite said first surface, a first step, which is located at an end of said first work piece and is adjacent to said first surface, and a second step, which is set away longitudinally from said end of said first work piece and is located adjacent to said second surface; and
   a second work piece having a third surface, a fourth surface, which is located opposite said third surface, and an end, which is beveled at an angle relative to a plane that is perpendicular to said fourth surface, wherein said end of said first work piece is juxtaposed said end of said second work piece so as to form said weld joint.
14. The weld joint of paragraph 13, wherein said first work piece is oriented such that said first step is above said second step, and said end of said second work piece is positioned above said first step such as to form a joint groove within which at least a portion of said first step is contained, and such that said second surface is substantially aligned with said fourth surface.
15. The weld joint of paragraph 14, wherein substantially all of said first step is contained within said joint groove.
16. The weld joint of paragraph 14, wherein said angle is an angle of about 25 degrees.
17. The weld joint of paragraph 14, wherein said second step has a surface which is substantially parallel to a plane that is perpendicular to said second surface.
18. The weld joint of paragraph 13, wherein said first and second work pieces are extended in a vertical arrangement.
19. The weld joint of paragraph 13, wherein said first and second work pieces are plate-like.
20. The weld joint of paragraph 13, wherein said first work piece includes a first tube section, said second surface being an outer surface of said first tube section, and said second work piece includes a second tube section, said fourth surface being an outer surface of said second tube section.
21. The weld joint of paragraph 13, wherein said first work piece includes a first tube section, said second surface being an inner surface of said first tube section, and said second work piece includes a second tube section, said fourth surface being an inner surface of said second tube section.
22. A method for welding a first work piece to a second work piece, comprising the steps of:
   providing a first work piece having a first surface, a second surface, which is located opposite the first surface, a first step, which is located at an end of the first work piece and is adjacent to the first surface, and a second step, which is set away longitudinally from the end of the first work piece and is located adjacent to the second surface;
   providing a second work piece having a third surface, a fourth surface, which is located opposite the third surface, and an end, which is beveled at an angle relative to a plane that is perpendicular to the fourth surface;
   forming a weld joint by juxtaposing the ends of the first and second work pieces;
   and performing at least one welding process to weld the first work piece to the second work piece at the weld joint.
23. The method of paragraph 22, wherein said forming step is performed so that the first step of the first work piece is above the second step of the first work piece, and the end of the second work piece is above the first step of the first work piece such as to form a joint groove, within which at least a portion of the first step of the first work piece is exposed, and such that the second surface is aligned with the fourth surface;
24. The method of paragraph 22, wherein said forming step is performed so that the first and second work pieces extend vertically.
25. The method of paragraph 22, wherein the first step of the first work piece has an edge located away from the first surface, and said step of performing at least one welding process includes a step of moving a welding tip along the edge, while feeding a welding wire along the end of the second work piece near the fourth surface.
26. The method of paragraph 22, wherein said step of performing at least one welding process is performed using an engineered consumable insert to fill the joint groove.

## Claims

1. A combination of work pieces, comprising:
a first work piece having a first surface, a second surface, which is located opposite said first surface, a first step, which is located at an end of said work piece and is adjacent to said first surface, and a second step, which is set away longitudinally from said end of said first work piece and is located adjacent to said second surface; and
a second work piece having a third surface, a fourth surface, which is located opposite said third surface, and an end, which is beveled at an angle relative to a plane that is perpendicular to said fourth surface, said end of said first work piece and said end of said second work piece being sized and shaped so as to cooperate in forming a weld joint.

2. The combination of Claim 1, wherein said end of said first work piece is dissimilar in shape to said end of said second work piece.

3. The combination of Claim 1, wherein said first step is adjacent to said second step.

4. The combination of Claim 1, wherein said end of said first work piece and said end of said second work piece are opposite ends of a single body.

5. The combination of Claim 1, wherein said end of said first work piece is sized and shaped such as to be juxtaposed said end of said second work piece, with said second surface substantially aligned with said fourth surface.

6. The combination of Claim 1, wherein said first work piece and said second work piece are plate-like.

7. The combination of Claim 1, wherein said second step has a surface which is substantially parallel to a plane which is perpendicular to said second surface.

8. The combination of Claim 1, wherein said angle is an angle of about 25 degrees.

9. The combination of Claim 1, wherein said first work piece includes a first tube section, said second surface being an outer surface of said first tube section, and said second work piece includes a second tube section, said fourth surface being an outer surface of said second tube section.

10. The combination of Claim 1, wherein said first work piece includes a first tube section, said second surface being an inner surface of said first tube section, and said second work piece includes a second tube section, said fourth surface being an inner surface of said second tube section.

11. The combination of Claim 10, wherein said second step has a surface that is substantially parallel to a plane that is perpendicular to a centerline of said first tube section.

12. The combination of Claim 10, said angle being an angle of about 25 degrees.

13. A weld joint, comprising:
a first work piece having a first surface, a second surface, which is located opposite said first surface, a first step, which is located at an end of said first work piece and is adjacent to said first surface, and a second step, which is set away longitudinally from said end of said first work piece and is located adjacent to said second surface; and
a second work piece having a third surface, a fourth surface, which is located opposite said third surface, and an end, which is beveled at an angle relative to a plane that is perpendicular to said fourth surface, wherein said end of said first work piece is juxtaposed said end of said second work piece so as to form said weld joint.

14. The weld joint of Claim 13, wherein said first work piece is oriented such that said first step is above said second step, and said end of said second work piece is positioned above said first step such as to form a joint groove within which at least a portion of said first step is contained, and such that said second surface is substantially aligned with said fourth surface.

15. A method for welding a first work piece to a second work piece, comprising the steps of:
providing a first work piece having a first surface, a second surface, which is located opposite the first surface, a first step, which is located at an end of the first work piece and is adjacent to the first surface, and a second step, which is set away longitudinally from the end of the first work piece and is located adjacent to the second surface;
providing a second work piece having a third surface, a fourth surface, which is located opposite the third surface, and an end, which is beveled at an angle relative to a plane that is perpendicular to the fourth surface; forming a weld joint by juxtaposing the ends of the first and second work pieces; and performing at least one welding process to weld the first work piece to the second work piece at the weld joint.
